# EUROPÄISCHE PATENTSCHRIFT

(11) **EP 2 324 717 B1**
(45) Veröffentlichungstag und Bekanntmachung des Hinweises auf die Patenterteilung: **06.01.2016**
(21) Anmeldenummer: 11000842.2
(22) Anmeldetag: 03.04.2009
(51) Int. Cl.: A23F 3/32, A23F 3/34, A23L 2/395, A23L 2/52, A23L 2/56, A23L 2/60, A23F 3/00, A23F 5/00, A23L 1/236, A23L 1/29, A23L 2/00

(54) **Granulate für die Herstellung von kalorienreduzierten Instant-Getränken**
Granulates for producing low-calorie instant drinks
Granulés pour la fabrication de boissons instantanées réduites en calories

(30) Priorität: 07.05.2008 DE 102008022704; 10.06.2008 DE 102008027684
(43) Veröffentlichungstag der Anmeldung: 25.05.2011
(62) Teilanmeldung aus: 09741794.3
(73) Patentinhaber: Krüger GmbH & Co. KG, 51469 Bergisch-Gladbach (DE)
(72) Erfinder: Krüger, Willibert, 51467 Bergisch Gladbach (DE)
(74) Vertreter: Von Rohr Patentanwälte Partnerschaft mbB

(56) Entgegenhaltungen:
- EP-A1- 0 524 484
- WO-A1-2004/008870
- WO-A1-2006/007993
- DE-A1-102004 052 800
- DE-U1-202006 017 797

## Beschreibung

Die vorliegende Erfindung betrifft eine Instant-Getränkezusammensetzung, insbesondere zur Herstellung eines vorzugsweise kalorienreduzierten Instant-Getränks durch Aufbereiten mit einer trinkbaren Flüssigkeit, sowie ein Verfahren zu ihrer Herstellung. Des weiteren betrifft die vorliegende Erfindung die Verwendung einer solchen Instant-Getränkezusammensetzung zur Herstellung eines vorzugsweise kalorienreduzierten Instant-Getränks, insbesondere Instant-Teegetränks, durch Aufbereiten mit einer Trinkflüssigkeit, insbesondere Wasser.

Der Begriff der Instant-Produkte ist eine Bezeichnung für meist pulverförmige, in Wasser lösliche bzw. dispergierbare Produkte überwiegend auf dem Gebiet der Nahrungs- und Heilmittel, wie Kaffee-, Tee-, Kakao-, Milchprodukte etc. Die Herstellung von Instant-Produkten erfolgt im allgemeinen durch Extraktion der Nahrungs- und Heilmittel bzw. deren Inhaltsstoffen, gefolgt von einer anschließenden Trocknung, insbesondere Gefrier- oder Sprühtrocknung. Für weitere Einzelheiten kann verwiesen werden auf Römpp Chemielexikon, Band 3, 10. Auflage, Georg-Thieme-Verlag, Stuttgart/New York, 1997, Seite 1936, Stichwort: "Instant-Produkte", sowie die dort referierte Literatur, deren jeweiliger Inhalt hiermit durch Bezugnahme eingeschlossen ist. Auf diese Weise werden insbesondere auch Instant-Teegetränke hergestellt.

Nachteilig bei den Instant-Getränkezusammensetzungen des Standes der Technik ist, daß sie oftmals über einen hohen Gehalt an Zucker(n), insbesondere Kristallzucker bzw. Saccharose, verfügen, um auf diese Weise dem aufbereiteten Instant-Getränk die gewünschte Süße zu verleihen. Ein hoher Kristallzuckergehalt ist aber aus ernähungsphysiologischen Gründen oftmals unerwünscht. Zudem wirkt ein hoher Kristallzuckergehalt kariogen, was ebenfalls nachteilig ist. Derartige Instant-Getränkezusammensetzungen des Standes der Technik sind darüber hinaus für Diabetiker weniger geeignet bzw. nicht vorteilhaft.

Eine Vielzahl der handelsüblichen Instant-Getränkemischungen weist zudem den Nachteil auf, daß sie oftmals als feinteiliges Pulver oder allenfalls als kleinkörniges Granulat bzw. Agglomerat vorliegen, wobei diese Produkte oft zu einer hohen Staubentwicklung neigen, was sowohl bei ihrer Herstellung als auch bei ihrer Verpackung und schließlich auch bei der Handhabung durch den Endverbraucher nachteilig ist. Zudem weisen derartige Instant-Produkte eine schlechte Dosierbarkeit auf. Weiterhin sind die pulverbasierten Instant-Produkte des Standes der Technik nicht immer in der Trinkflüssigkeit, insbesondere Wasser, optimal löslich, da sie bei Einbringen in die Flüssigkeit zum Verklumpen neigen. Zudem ist bei solchen Instant-Getränkezusammensetzungen des Standes der Technik insbesondere auch bei längerer Lagerung oftmals eine Tendenz zur Klumpenbildung zu beobachten.

Im Stand der Technik ist es bislang versucht worden, den ernährungsphysiologisch nicht optimalen Zucker in Form von Saccharose bzw. Kristallzucker durch sogenannte Süßstoffe zu ersetzen. Aufgrund der hohen Süßkraft der im Stand der Technik eingesetzten Süßstoffe kann es schnell zu einer Übersüßung des aus der Zusammensetzung hergestellten Trinkproduktes kommen. Die im Stand der Technik bekannten Instant-Getränkezusammensetzungen weisen somit eine schlechte Dosierbarkeit auf, was maßgeblich mit der hohen Süßkraft der verwendeten Süßstoffe zusammenhängt. Zudem ist es im Stand der Technik bislang nicht gelungen, eine kalorienreduzierte Instant-Getränkezusammensetzung insbesondere auf Basis eines Granulats bereitzustellen, welche auch bei längeren Lagerzeiten nicht verklumpt und welche zudem gut in der Trinkflüssigkeit löslich ist und welche die gute Dosierbarkeit einer nichtkalorienreduzierten Instant-Getränkezusammensetzung aufweist.

Die Aufgabe der vorliegenden Erfindung besteht somit darin, eine Instant-Getränkezusammensetzung bereitzustellen, welche sich zur Herstellung eines vorzugsweise kalorienreduzierten Instant-Getränks durch Aufbereiten mit einer Trinkflüssigkeit eignet und die zuvor geschilderten Nachteile des Standes der Technik zumindest im wesentlichen vermeidet oder aber zumindest verringert bzw. abschwächt.

Insbesondere besteht die Aufgabe der vorliegenden Erfindung darin, eine Instant-Getränkezusammensetzung bereitzustellen, welche gegenüber dem Stand der Technik ernährungsphysiologisch verbessert und zudem in geringerem Maße kariogen ist, wobei gleichzeitig die Dosierbarkeit und das Verklumpungsverhalten sowohl beim Einbringen in eine Trinkflüssigkeit als auch bei der Lagerung verbessert sein soll.

Zur Lösung der zuvor geschilderten Aufgabe schlägt die vorliegende Erfindung eine Zusammensetzung (d. h. Instant-Getränkezusammensetzung) nach Anspruch 1 vor; weitere vorteilhafte Ausgestaltungen sind Gegenstand der diesbezüglichen abhängigen Ansprüche.

Weiterer Gegenstand der vorliegenden Erfindung ist ein Verfahren zur Herstellung der erfindungsgemäßen Instant-Getränkezusammensetzung nach Anspruch 6; weitere, vorteilhafte Ausgestaltungen sind Gegenstand der diesbezüglichen abhängigen Verfahrensansprüche.

Weiterer Gegenstand der vorliegenden Erfindung ist die nach dem erfindungsgemäßen Verfahren erhältliche Instant-Getränkezusammensetzung nach Anspruch 12.

Schließlich ist ein wiederum weiterer Gegenstand der vorliegenden Erfindung die erfindungsgemäße Verwendung der Zusammensetzung nach der vorliegenden Erfindung, wie sie in Anspruch 13 definiert ist; weitere, vorteilhafte Ausgestaltungen sind Gegenstand des diesbezüglich abhängigen Verwendungsanspruchs.

Bei allen nachstehend genannten relativen bzw prozentualen gewichtsbezogenen Mengenangaben ist zu beachten, daß diese im Rahmen der erfindungsgemäBen Zusammensetzung vom Fachmann derart auszuwählen sind, daß sie sich in der Summe unter Einbeziehung gegebenenfalls weiterer Komponenten bzw. Inhaltsstoffe bzw. Zusatzstoffe bzw. Bestandteile, insbesondere wie nachfolgend definiert, stets um 100 Gew.-% ergänzen. Dies versteht sich für den Fachmann aber von selbst. Im übrigen gilt, daß der Fachmann anwendungsbezogen oder einzelfallbedingt von den nachfolgend aufgeführten Mengenangaben abweichen kann, ohne daß er den Rahmen der vorliegenden Erfindung verläßt.

Gegenstand der vorliegenden Erfindung ist somit - gemäß einem **ersten** Aspekt der vorliegenden Erfindung - eine Instant-Getränkezusammensetzung, insbesondere zur Herstellung eines vorzugsweise kalorienreduzierten Instant-Getränks durch Aufbereiten mit einer trinkbaren Flüssigkeit, in Form eines Granulats, wobei die Zusammensetzung mindestens einen Granulatbildner und mindestens einen Geschmacksbildner aufweist. Denn die Anmelderin hat in überraschender Weise gefunden, daß durch die gezielte Kombination mindestens eines Granulatbildners, insbesondere wie nachfolgend definiert, mit mindestens einem Geschmacksbildner, insbesondere wie nachfolgend definiert, eine Instant-Getränkezusammensetzung nach der Erfindung bereitgestellt wird, welche gegenüber dem Stand der Technik signifikant verbesserte Eigenschaften aufweist. In diesem Zusammenhang verfügt die erfindungsgemäße Instant-Getränkezusammensetzung aufgrund ihrer Kalorienreduktion über verbesserte ernährungsphysiologische Eigenschaften bei gleichzeitig verminderter Kariogenität. Zudem weist die erfindungsgemäße Instant-Getränkezusammensetzung eine gute Lagerstabilität (kein Verklumpen) und ein verbessertes Löslichkeitsverhalten bei gleichzeitig verbesserter Dosierbarkeit auf.

Erfindungsgemäß werden unter dem Begriff "Granulat" Anhäufungen von Granulatkömchen verstanden, wobei es sich bei den jeweiligen Granulatkörnern beispielsweise um asymmetrische Aggregate aus Pulverpartikeln handeln kann. Das Granulat bzw. die Granulatkörnchen weisen im allgemeinen keine harmonische geometrische Form auf; die Form einer Kugel, eines Stäbchens, eines Zylinders usw, ist im allgemeinen nur ungefähr und andeutungsweise erhalten. Die Oberfläche der einzelnen Granulatkörnchen kann im allgemeinen uneben sein. Zudem können die Granulatkörner in vielen Fällen mehr oder weniger porös sein. Zu weiteren Einzelheiten zu dem Begriff der Granulate kann insbesondere verwiesen werden auf Römpp Chemielexikon, 10. Auflage, Georg-Thieme-Verlag, Stuttgart/New York, Band 2,1997, Seite 1600, Stichwort: "Granulate", sowie die dort referierte Literatur, deren jeweiliger Inhalt durch Bezugnahme eingeschlossen ist.

Im Rahmen der vorliegenden Erfindung hat es sich als besonders vorteilhaft erwiesen, wenn die Menge an Granulatbildner 1 bis 99 Gew.-%, insbesondere 10 bis 98 Gew.-%, vorzugsweise 20 bis 97 Gew.-%, bevorzugt 30 bis 96 Gew.-%, besonders bevorzugt 50 bis 95 Gew.-%, bezogen auf die Zusammensetzung und/oder das Granulat, beträgt.

Im Rahmen der vorliegenden Erfindung werden zudem besonders gute Ergebnisse hinsichtlich der vorgenannten Eigenschaften, wie Dosierbarkeit, Löslichkeitsverhalten etc., erhalten, wenn der Granulatbildner ausgewählt ist aus der Gruppe von Zuckeralkoholen, Süßstoffen, Stärkederivaten, Zuckern und deren Mischungen. Die vorgenannten Substanzen bilden gewissermaßen - ohne sich auf diese Theorie beschränken zu wollen - das Grundgerüst bzw. die Matrix der in Granulatform vorliegenden erfindungsgemäßen Instant-Getränkezusammensetzung, in welche die Geschmacksbildner sozusagen eingelagert bzw. integriert sein können. Aufgrund der Verwendung der vorgenannten Substanzen auf Basis von Zuckeralkoholen, Süßstoffen und Stärkederivaten wird zudem eine signifikante Kalorienreduktion erreicht. Die Verwendung der vorgenannten Substanzen führt auch zu einer Ausbildung von insbesondere hinsichtlich ihrer Löslichkeit und Verklumpungseigenschaften verbesserten Granulaten.

Was die im Rahmen der erfindungsgemäßen Instant-Getränkezusammensetzung verwendbaren Zuckeralkohole anbelangt, so können diese aus der Gruppe von Erythrit (Erythritol), Mannit (Mannitol), Xylit (Xylitol), Sorbit (Sorbitol), Isomaltit bzw. Isomalt, Maltit (Maltitol), Lactit (Lactitol) und Galactit (Galactitol) ausgewählt sein.

Die zuvor angeführten Zuckeralkohole werden auch zu den sogenannten Zuckeraustauschstoffen gezählt. Hierunter versteht man eine Sammelbezeichnung für Stoffe, welche anstelle von Saccharose zur Süßung von Lebensmitteln verwendet werden. Im Gegensatz zu den mitunter intensiv schmeckenden Süßstoffen, von denen der Begriff der Zuckeraustauschstoffe im allgemeinen abgegrenzt wird, werden Zuckeraustauschstoffe technologisch wie Saccharose eingesetzt, d. h. sie besitzen einen "Körper" und einen physiologischen Brennwert (nutritive Zuckeraustauschstoffe). Die Süßkraft entspricht in weiten Grenzen etwa der von Saccharose. Der physiologische Vorteil der Zuckeraustauschstoffe im Vergleich zur Saccharose liegt in der insulinunabhängigen Metabolisierung (Diabetiker) und in der zum Teil verminderten kariogenen Wirkung. Für einige Zuckeraustauschstoffe, wie z. B. Xylit, ist sogar eine antikariogene Wirkung beschrieben. Die Zuckeraustauschstoffe und die davon verschiedenen Süßstoffe werden gemeinsam als Süßungsmittel bezeichnet. Für weitergehende Einzelheiten zu dem Begriff der Zuckeraustauschstoffe kann beispielsweise verwiesen werden auf Römpp Lexikon Chemie, Band 6, 10. Auflage, Georg-Thieme-Verlag, Stuttgart/New York, 1999, Seite 5098 bis 5100, Stichwort: "Zuckeraustauschstoffe", und auf Römpp Lexikon Lebensmittelchemie, 9. Auflage, Georg-Thieme-Verlag, Stuttgart/New York, Seite 955, Stichwort: "Zuckeraustauschstoffe" sowie auf die dort jeweils referierte Literatur, deren jeweiliger Inhalt hiermit durch Bezugnahme eingeschlossen ist.

Der Begriff der zu den Zuckeraustauschstoffen zählenden Zuckeralkohole (Polyole), wie er erfindungsgemäß verwendet wird, ist eine Gruppenbezeichnung für im allgemeinen kristalline, gut wasserlösliche Polyhydroxyverbindungen, die durch Reduktion der Carbonylfunktion aus Zuckern entstehen. Hierbei werden insbesondere Monosaccharid-Zuckeralkohole und Disaccharid-Zuckeralkohole unterschieden. Für weitergehende Einzelheiten zu dem Begriff der Zuckeralkohole kann insbesondere verwiesen werden auf Römpp Lexikon Chemie, 10. Auflage, Georg-Thieme-Verlag, Stuttgart/New York, Band 6, 1999, Seite 5097, Stichwort: "Zuckeralkohole", und auf Römpp Lexikon Lebensmittelchemie, 9. Auflage, Georg-Thieme-Verlag, Stuttgart/New York, 1995, Seiten 1953/954, Stichwort: "Zuckeralkohole" sowie auf die dort jeweils referierte Literatur, deren jeweiliger Inhalt durch Bezugnahme eingeschlossen ist.

Was die erfindungsgemäß verwendbaren Süßstoffe anbelangt, so können diese ausgewählt sein aus der Gruppe von Acesulfam, Cyclamat, Glycyrrhizin, Aspartam, Dulcin, Saccharin (beispielsweise auch Natriumsaccharin und/oder Calciumsaccharin), Rebaudiosid (z. B. Rebaudiosid A), Steviosid, Naringin-Dihydrochalkon, Monellin, Neohesperidin-Dihydrochalkon (NHDC), Sucralose, Thaumatin, Neotam und deren Mischungen, insbesondere Aspartam und/oder Acesulfam.

Was die Menge an Süßstoff in der erfindungsgemäßen Zusammensetzung anbelangt, so sollte diese im Bereich von 0,01 bis 5 Gew.-%, insbesondere 0,1 bis 4 Gew.-%, vorzugsweise 0,2 bis 3 Gew.-%, bezogen auf die Zusammensetzung und/oder das Granulat, liegen,

In diesem Zusammenhang sollte die Menge an Süßstoff in der erfindungsgemäßen Zusammensetzung höchstens 5 Gew.-%, insbesondere höchstens 3 Gew.-%, vorzugsweise höchstens 2 Gew.-%, besonders bevorzugt höchstens 1 Gew.-%, bezogen auf die Zusammensetzung und/oder das Granulat, betragen.

Im Unterschied zu Zuckeraustauschstoffen versteht man unter Süßstoffen Verbindungen synthetischer oder natürlicher Herkunft, die keinen oder im Verhältnis zur Süßkraft einen vernachlässigbaren physiologischen Brennwert besitzen, weswegen sie im Englischen aus als "*non-nutritive sweeteners*" bezeichnet werden, und eine um ein Vielfaches höhere Süßkraft als Saccharose aufweisen (die Süßkraft einer Verbindung ist durch die Verdünnung gegeben, bei der sie ebenso süß wie eine Saccharoselösung schmeckt (isosüße Lösung). Für weitere Einzelheiten zu dem Begriff der Süßstoffe kann insbesondere verwiesen werden auf Römpp Chemielexikon, 10. Auflage, Georg-Thieme-Verlag, Stuttgart/New York, Band 5,1998, Seiten 4302 bis 4304, Stichwort: "Süßstoffe", sowie die dort referierte Literatur, deren jeweiliger Inhalt hiermit durch Bezugnahme eingeschlossen ist.

Was die erfindungsgemäß verwendbaren Stärkederivate anbelangt, so können diese ausgewählt sein aus Stärkeabbauprodukten, insbesondere Dextrinen und Maltodextrinen, vorzugsweise Maltodextrinen. Für weitere Einzelheiten zu Dextrinen und Maltodextrinen kann insbesondere verwiesen werden auf Römpp Chemielexikon, 10. Auflage, Georg-Thieme-Verlag, Stuttgart/New York, Band 2, 1997, Seite 928, Stichwort: "Dextrine", und Band 4, 1998, Seite 2513, Stichwort: "Maltodextrine", und auf Römpp Lexikon Lebensmittelchemie, Georg-Thieme-Verlag, Stuttgart/New York, 9. Auflage, 1995, Seite 213, Stichwort: "Dextrine", und Seite 518, Stichwort: "Maltodextrine", sowie auf die dort jeweils referierte Literatur, deren jeweiliger Inhalt durch Bezugnahme eingeschlossen ist.

Wenn die erfindungsgemäße Instant-Getränkezusammensetzung bzw. das Granulat beispielsweise Zucker enthält, so kann dieser insbesondere ausgewählt sein aus der Gruppe von Saccharose (Kristallzucker), Mannose, Maltose, Dextrose, Lactose, Glucose, Xylose, Isomaltulose und deren Mischungen.

Insbesondere hat die Verwendung von Isomaltulose (Palatinose) -einem Disaccharid, das üblicherweise aus Rübenzucker gewonnen wird und auch als natürlicher Bestandteil von Honig oder Zuckerrohr bekannt ist und dessen natürliche Süße der des Zuckers sehr nahekommt- den Vorteil, daß Isomaltulose nicht kariogen ist, d. h. von Karies erzeugenden Bakterien der Mundflora nicht zur Säurebildung verwendet werden kann. Genau wie Zucker wird aber Isomaltulose voll verstoffwechselt und weist deshalb denselben kalorischen Wert von 4 kcal/g auf; doch im Gegensatz zu Zucker findet dieser Prozeß wesentlich langsamer statt, so daß die glykämische Wirkung sehr niedrig ist und die Glukose dem Körper über einen längeren Zeitraum zur Verfügung gestellt wird. Für den Menschen bedeutet das: Wenn die Glukose nur langsam ins Blut übergeht, bleibt der Blutzuckerspiegel stabiler, und dem Körper steht die Energie aus dem Kohlenhydrat über einen längeren Zeitraum zur Verfügung. Die Frage nach der optimalen Verfügbarkeit von Energie ist sowohl in Wissenschaft als auch Produktentwicklung von wachsendem Interesse, da dies eine beeinflussende Rolle nicht nur auf die körperliche, sondern auch auf die geistige Leistungsfähigkeit haben könnte.

Die erfindungsgemäße Zusammensetzung bzw. das Granulat zeichnet sich insbesondere dadurch aus, daß es einen gegenüber handelsüblichen nichtkalorienreduzierten Produkten, insbesondere handelsüblichen nichtkalorienreduzierten Instant-Getränkezusammensetzungen, reduzierten Zuckergehalt, insbesondere Saccharosegehalt, vorzugsweise einen reduzierten Kristallzuckergehalt, aufweist. Dies wird im Rahmen der vorliegenden Erfindung durch den gezielten Einsatz von Zuckeralkoholen, Süßstoffen bzw. Stärkederivaten erreicht. Auf diese Weise wird eine signifikante Kalorienreduktion ermöglicht, wobei gleichzeitig gewährleistet ist, daß die Granulate der erfindungsgemäßen Zusammensetzung insofern optimiert sind, als eine hervorragende Löslichkeit in der Trinkflüssigkeit und eine gute Dosierung gegeben ist - insbesondere da die erfindungsgemäße Instant-Getränkezusammensetzung eine zu herkömmlichen Zusammensetzungen vergleichbare Süße aufweist. Gleichzeitig ist das Verklumpungsverhalten sowohl bei Lagerung als auch bei Einbringen in die Trinkflüssigkeit deutlich verbessert.

Durch den gezielten Einsatz von Zuckeralkoholen, Süßstoffen bzw. Stärkederivaten wird gleichermaßen die Süßkraft der erfindungsgemäßen Zusammensetzung erhöht, so daß diese bei der Anwendung (d. h. Herstellung des trinkfertigen Getränkes) im Vergleich zu Produkten des Standes der Technik in geringeren Mengen eingesetzt zu werden braucht und folglich die Zufuhr an Zucker bei ansonsten gleicher Geschmacksintensität bzw. Süße des trinkfertigen Getränkes signifikant reduziert wird.

In diesem Zusammenhang kann es erfindungsgemäß vorgesehen sein, daß die Menge an Zucker(n), insbesondere Saccharose, 25 bis 80 Gew.-%, insbesondere 30 bis 75 Gew.-%, vorzugsweise 35 bis 70 Gew.-%, bezogen auf die Zusammensetzung und/oder das Granulat, beträgt.

Wie zuvor angeführt, kann die erfindungsgemäße Zusammensetzung einen verminderten Zuckergehalt, insbesondere Saccharosegehalt, vorzugsweise Kristallzuckergehalt, aufweisen. Diesbezüglich sollte die Menge an Zucker(n), insbesondere Saccharose, höchstens 80 Gew.-%, insbesondere höchstens 75 Gew.-%, vorzugsweise höchstens 70 Gew.-%, bezogen auf die Zusammensetzung und/oder das Granulat, betragen.

Was den Geschmacksbildner bzw. die geschmacksgebenden Komponenten bzw. die Geschmacksstoffe anbelangt, so sollte die Menge an Geschmacksbildner in der erfindungsgemäßen Zusammensetzung 0,1 bis 75 Gew.-%, insbesondere 0,5 bis 60 Gew.-%, vorzugsweise 1 bis 50 Gew.-%, bevorzugt 2 bis 25 Gew.-%, bezogen auf die Zusammensetzung und/oder das Granulat, betragen.

In diesem Zusammenhang kann es erfindungsgemäß vorgesehen sein, daß der Geschmacksbildner ausgewählt ist aus Extrakten, insbesondere Pflanzenextrakten, Fruchtextrakten, Tee-Extrakten oder deren Mischungen. In diesem Zusammenhang sollte die Menge an Extrakten, insbesondere wie zuvor definiert, 0,1 bis 10 Gew.-%, bevorzugt 0,25 bis 8 Gew.-%, besonders bevorzugt 0,5 bis 6 Gew.-%, ganz besonders bevorzugt 1 bis 5 Gew.-%, bezogen auf die Zusammensetzung und/oder das Granulat, betragen.

Gleichermaßen kann es erfindungsgemäß vorgesehen sein, daß der Geschmacksbildner ausgewählt ist aus Aromen und/oder Aromastoffen. Diesbezüglich kann die Menge an Aromen bzw. Aromastoffen 0,01 bis 10 Gew.-%, bevorzugt 0,1 bis 8 Gew.-%, besonders bevorzugt 0,3 bis 5 Gew.-%, ganz besonders bevorzugt 0,5 bis 3 Gew.-%, bezogen auf die Zusammensetzung und/oder das Granulat, betragen.

Im Rahmen der vorliegenden Erfindung ist es gleichermaßen möglich, daß der Geschmacksbildner ausgewählt ist aus Pflanzenpulvern, Fruchtpulvern und/oder Saftpulvern. In diesem Zusammenhang kann die Menge an Pflanzenpulver, Fruchtpulver bzw. Saftpulver, bezogen auf die Zusammensetzung bzw. das Granulat, 0,01 bis 8 Gew.-%, bevorzugt 0,05 bis 6 Gew.-%, besonders bevorzugt 0,1 bis 4 Gew.-%, ganz besonders bevorzugt 0,15 bis 3 Gew.-%, betragen.

In bezug auf die erfindungsgemäße Zusammensetzung können die zuvor genannten Geschmacksbildner auch kombiniert werden, so daß insgesamt eine individuelle Geschmacksgebung vorgenommen werden kann.

Wenn die erfindungsgemäße Instant-Getränkezusammensetzung bzw. das Granulat Säuerungsmittel enthält, können diese insbesondere aus der Gruppe von Genußsäuren, vorzugsweise Citronensäure, Weinsäure und Äpfelsäure, ausgewählt sein. Im allgemeinen werden solche Säuerungsmittel in Mengen von 0,1 bis 10 Gew.-%, bevorzugt 1 bis 10 Gew.-%, ganz besonders bevorzugt 2 bis 8 Gew.-%, bezogen auf die Zusammensetzung bzw. auf Granulat, eingesetzt. Darüber hinaus kann die erfindungsgemäße Instant-Getränkezusammensetzung bzw. das Granulat auch Vitamine, insbesondere Ascorbinsäure (Vitamin C), enthalten. Die Vitamine werden insbesondere in Mengen von 0,01 bis 5 Gew.-%, bevorzugt 0,1 bis 4 Gew.-%, ganz besonders bevorzugt 0,5 bis 2 Gew.-%, bezogen auf die Zusammensetzung bzw, das Granulat, eingesetzt.

Weiterhin kann die erfindungsgemäße Instant-Getränkezusammensetzung bzw. das Granulat Farbstoffe, insbesondere natürliche und/oder naturidentische Farbstoffe, enthalten. Diesbezüglich können die Farbstoffe beispielsweise in Mengen von 0,01 bis 5 Gew.-%, bevorzugt 0,1 bis 4 Gew.-%, ganz besonders bevorzugt 0,5 bis 3 Gew.-%, bezogen auf die Zusammensetzung bzw. das Granulat, eingesetzt werden.

Was die erfindungsgemäße Instant-Getränkezusammensetzung weiterhin anbelangt, so kann diese im Rahmen der vorliegenden Erfindung beispielsweise in Form eines kornförmigen Granulats vorliegen. In diesem Zusammenhang sollte das Granulat eine Partikelgröße von 0,1 bis 6 mm, insbesondere 0,5 bis 5 mm, vorzugsweise 0,5 bis 3 mm, aufweisen.

Gleichermaßen ist es im Rahmen der vorliegenden Erfindung jedoch auch möglich, daß die erfindungsgemäße Zusammensetzung in Form eines zumindest im wesentlichen stäbchenförmigen Granulats ("Würstchengranulat") vorliegt. Diesbezüglich sollte das Granulat einen Partikeldurchmesser bzw. Stäbchendurchmesser von 0,1 bis 6 mm, insbesondere 0,2 bis 5 mm, vorzugsweise 0,5 bis 3,5 mm, aufweisen bzw. eine Partikellänge bzw. Stäbchenlänge von 0,2 bis 10 mm, insbesondere 0,4 bis 6 mm, vorzugsweise 0,5 bis 4 mm, aufweisen.

Aufgrund der spezifischen Auswahl der Form und der Größe bzw. Länge der Granulatteilchen wird insbesondere gewährleistet, daß die erfindungsgemäße Zusammensetzung ein gutes Löslichkeitsverhalten aufweist und nicht klumpt. Die Teilchengröße kann durch an sich bekannte Methoden, z. B. durch Siebanalyse, granulometrisch, durch Lichtbeugung etc., bestimmt werden. Was die vorgenannten Teilchengrößen, -durchmesser bzw. -längen anbelangt, so sind diese Angaben derart zu verstehen, daß mindestens 90 %, insbesondere mindestens 95 %, vorzugsweise mindestens 99 % oder mehr des Granulats Teilchengrößen in den vorgenannten Bereichen aufweisen.

Die erfindungsgemäße Instant-Getränkezusammensetzung zeichnet sich zudem durch eine spezielle Schüttdichte aus. So kann die Zusammensetzung ein Granulat mit einer Schüttdichte von 200 bis 600 g/l, insbesondere 325 bis 550 g/I, vorzugsweise 350 bis 480 g/I, aufweisen.

Durch die spezifische Schüttdichte der erfindungsgemäßen Instant-Getränkezusammensetzung liegt ein gewichtsbezogen hoher Volumenanteil vor. Dies führt unter anderem dazu, daß die Dosierfähigkeit der erfindungsgemäßen Instant-Getränkezusammensetzung bei der Zubereitung des betreffenden Instant-Getränks mit einer Trinkflüssigkeit weiter verbessert wird. Zudem wird der massenbezogene Anteil an für die Aufbereitung des Instant-Getränks benötigter Instant-Getränkezusammensetzung reduziert.

Unter dem Begriff der Schüttdichte ist im allgemeinen der Quotient aus der Masse und dem eingenommenen Volumen, das Zwischenräume und, falls zusätzlich vorhanden, auch Hohlräume (z. B. Poren) einschließt, zu verstehen. Zur Bestimmung der Schüttdichte von Pulver bzw. Granulat kann auf die DIN ISO 607:1984-01 verwiesen werden. Man bestimmt die Schüttdichte, beispielsweise indem man die betreffende Zusammensetzung in einen Meßkasten, Meßbecher, Meßzylinder oder dergleichen schüttet und das Gewicht feststellt. Höher als die Schüttdichte, deren Reziprokes das Schüttvolumen ist, liegt die sogenannte Rütteldichte und erst recht die sogenannte Stampfdichte. Für weitere Einzelheiten zum Begriff der Schüttdichte kann insbesondere verwiesen werden auf Römpp Chemielexikon, 10. Auflage, Georg-Thieme-Verlag, Stuttgart/New York, Band 5,1998, Seite 3990, Stichwort: "Schüttdichte".

Das in der erfindungsgemäßen Instant-Getränkezusammensetzung eingesetzte Granulat besitzt einen gewissen Feuchtegehalt (Restfeuchte). So sollte die erfindungsgemäße Instant-Getränkezusammensetzung bzw. das Granulat, bezogen auf die Zusammensetzung und/oder das Granulat, eine Gesamtrestfeuchte von 0,5 bis 8 Gew.-%, insbesondere 1 bis 5 Gew.-%, vorzugsweise 2 bis 4 Gew.-%, aufweisen. Der maximale Gesamtrestfeuchtegehalt sollte in diesem Zusammenhang 8 Gew.-%, insbesondere 5 Gew.-%, vorzugsweise 4 Gew.-%, bezogen auf die Zusammensetzung bzw. das Granulat, nicht überschreiten. Die Einstellung des Feuchtigkeitsgehaltes bzw. der Gesamtrestfeuchte in dem Granulat dient einerseits der Erhöhung der Stabilität, insbesondere der Lagerungs- und Alterungsbeständigkeit, und zum anderen der Verbesserung der Verklumpungseigenschaften. In diesem Zusammenhang bezieht sich der Begriff "Gesamtrestfeuchte", wie er im Rahmen der vorliegenden Erfindung verwendet wird, auf den Gesamtfeuchtegehalt der erfindungsgemäßen Zusammensetzung bzw. des Granulats und umfaßt somit sowohl zugegebene Feuchtigkeit, beispielsweise in Form von Wasser, als auch bereits in den Komponenten inhärent vorhandene Feuchtigkeit, wie beispielsweise Kristallwasser oder dergleichen.

Die erfindungsgemäße Instant-Getränkezusammensetzung sollte in einer Trinkflüssigkeit, insbesondere in Wasser, zumindest im wesentlichen, insbesondere vollständig, löslich sein, um auf einfache Weise ein Instant-Getränk herzustellen, daß auch bei längeren Standzeiten zumindest im wesentlichen nicht zur Bildung eines Bodensatzes neigt.

Zudem ist es im Rahmen der vorliegenden Erfindung von Vorteil, wenn die erfindungsgemäße Instant-Getränkezusammensetzung zumindest im wesentlichen, vorzugsweise vollständig, aus dem Granulat besteht. In diesem Zusammenhang kann das Granulat kornförmige bzw. stäbchenförmige Teilchen sowie deren Mischungen aufweisen. Insgesamt sollte der Staubanteil bzw. der Anteil sehr kleiner Partikel mit deutlich unterhalb der zuvor für die Granulate angegebenen Größe möglichst gering sein, um das Staub- und Verklumpungsverhalten der erfindungsgemäßen Zusammensetzung weiter zu verbessern.

Die erfindungsgemäße Instant-Getränkezusammensetzung zeichnet sich insgesamt durch eine signifikante Kalorienreduktion aus, was insbesondere durch den Einsatz spezieller Granulatbildner, insbesondere auf Basis von Zuckeralkoholen, Süßstoffen und Stärkederivaten bzw. deren Mischungen erreicht wird. Aufgrund des gegenüber den im Stand der Technik bekannten Instant-Getränkezusammensetzungen deutlich verminderten Kaloriengehaltes ist die erfindungsgemäße Instant-Getränkezusammensetzung ernährungsphysiologisch verbessert, wobei gleichzeitig die kariogene Wirkung vermindert ist. Aufgrund der Verwendung bestimmter Süßstoffe kann zudem die Menge an erfindungsgemäßer Instant-Getränkezusammensetzung in einer Trinkflüssigkeit zur Herstellung eines Instant-Getränks gegenüber dem Stand der Technik verringert werden, so daß die erfindungsgemäße Zusammensetzung besonders sparsam bzw. in kleinen Mengen zu einer Trinkflüssigkeit zugegeben werden kann. So kann es beispielsweise vorgesehen sein, daß zur Herstellung eines trinkfertigen Instant-Getränks etwa 2 bis 9 g, insbesondere 3 bis 8 g, vorzugsweise 4 bis 6 g der erfindungsgemäßen Instant-Getränkezusammensetzung mit 100 ml einer Flüssigkeit vermischt bzw. darin gelöst werden, um ein schmackhaftes und kalorienreduziertes Instant-Getränk zu erhalten.

Wie zuvor angeführt, weist die erfindungsgemäße Instant-Getränkezusammensetzung aufgrund ihres Vorliegens in Form von speziellen Granulaten eine verbesserte Löslichkeit in der Trinkflüssigkeit auf. Aufgrund der definierten Größe der Granulate ist die Neigung zur Klumpenbildung sowohl bei Lagerung als auch bei Aufbereitung des Instant-Getränks deutlich reduziert. Auch optisch wird ein ansprechendes Aussehen der erfindungsgemäßen Instant-Getränkezusammensetzung erzielt. Bei der Handhabung, insbesondere sowohl bei der Verpackung als auch bei der Verwendung durch den Verbraucher, neigt die erfindungsgemäße Instant-Getränkezusammensetzung nicht zur Staubbildung.

Weiterer Gegenstand der vorliegenden Erfindung - gemäß einem **zweiten** Aspekt der vorliegenden Erfindung - ist ein Verfahren zur Herstellung der zuvor beschriebenen Instant-Getränkezusammensetzung nach der vorliegenden Erfindung, welche insbesondere in Form eines Granulats auf Basis mindestens eines Granulatbildners oder mindestens eines Geschmacksbildners, insbesondere wie zuvor definiert, vorliegt, wobei das erfindungsgemäße Verfahren die folgenden Verfahrensschritte umfaßt:
a) Herstellung einer Mischung, welche mindestens einen Granulatbildner und mindestens einen Geschmacksbildner enthält;
b) nachfolgend Herstellung eines Granulats aus der in Schritt a) hergestellten Mischung; -
c) schließlich Trocknung des in Schritt b) hergestellten Granulats.

In diesem Zusammenhang kann es vorgesehen sein, daß in Schritt a) die Mischung durch Zugabe, insbesondere Einmischen, von Wasser angefeuchtet wird.

Das Anfeuchten ist aber nicht auf die Zugabe von Wasser beschränkt: In diesem Zusammenhang kann es gleichermaßen vorgesehen sein, daß in Schritt a) die Mischung durch Zugabe, insbesondere Einmischen, von flüssigen Extrakten, insbesondere Pflanzenextrakten, Fruchtextrakten, Tee-Extrakten oder deren Mischungen, angefeuchtet wird. Im Rahmen des erfindungsgemäßen Verfahrens ist es zudem möglich, daß in Schritt a) die Mischung durch Zugabe, insbesondere Einmischen, von Pflanzensäften, Fruchtsäften oder deren Mischungen, angefeuchtet wird. Auf diese Weise wird neben dem Anfeuchten gleichermaßen eine Aromatisierung der erfindungsgemäßen Instant-Getränkezusammensetzung erreicht.

Durch das Anfeuchten in Schritt a) sollte die Mischung auf einen Gesamtfeuchtegehalt von 0,5 bis 15 Gew.-%, insbesondere 0,5 bis 10 Gew.-%, vorzugsweise 2 bis 5 Gew.-%, bezogen auf die Mischung, eingestellt werden, was - wie zuvor beschrieben - durch die Zugabe von Wasser, flüssigen Extrakten bzw. Säften erreicht werden kann. Auf diese Weise wird gewissermaßen die Konsistenz der der erfindungsgemäßen Instant-Getränkezusammensetzung zugrundeliegenden Mischung vorgegeben, so daß auf diese Weise die nachfolgende Granulierung sozusagen optimiert wird.

Der Gesamtfeuchtegehalt in bezug auf die der erfindungsgemäßen Instant-Getränkezusammensetzung zugrundeliegenden Mischung bezieht sich gleichermaßen auf den Gesamtgehalt an Feuchtigkeit und umfaßt somit zugegebene Flüssigkeiten und inhärent vorhandenes Kristallwasser.

Die in Schritt b) vorgesehene Herstellung des Granulats kann in üblichen Granulatoren bzw. Granuliervorrichtungen durchgeführt werden.

Im Rahmen der vorliegenden Erfindung ist es in diesem Zusammenhang möglich, daß in Schritt b) die Herstellung des Granulats durch Hindurchleiten bzw. Hindurchdrücken bzw. Hindurchpressen der in Schritt a) hergestellten Mischung durch mindestens ein Sieb erfolgt. Auf diese Weise können gewissermaßen würstchenähnliche Granulate erhalten werden, wobei der Durchmesser der erhaltenen Granulate insbesondere durch die Maschenweite der Siebe bzw. des Siebes bestimmt wird und die Länge der erhaltenen Granulate, welche dann insbesondere in Stäbchenform vorliegen, beispielsweise auch durch den Gesamtfeuchtegehalt der zu granulierenden Mischung bestimmt wird, da hierdurch gewissermaßen das Abreißen bzw. Abbrechen der durch das Sieb bzw. die Siebe geführten bzw. gepreßten Mischung beeinflußt wird.

Was die Herstellung der Mischung in Schritt a) bzw. die Granulierung in Schritt b) des erfindungsgemäßen Verfahrens anbelangt, so sollte diesbezüglich insbesondere bei Raumtemperatur, insbesondere bei etwa 20° C, und/oder bei Umgebungsdruck, insbesondere bei einem Druck von etwa 1.013 hPa, verfahren werden.

In Schritt c) des erfindungsgemäßen Verfahrens erfolgt die Trocknung des Granulats. In diesem Zusammenhang kann in Schritt c) das Granulat auf eine Gesamtrestfeuchte von 0,5 bis 8 Gew.-%, insbesondere 1 bis 5 Gew.-%, vorzugsweise 2 bis 4Gew.-%, bezogen auf das Granulat, eingestellt werden. Auch hier bezieht sich die Restfeuchte auf die Gesamtmenge an zugegebener Feuchtigkeit und inhärenter Feuchtigkeit, wie Kristallwasser.

In diesem Zusammenhang kann in Schritt c) die Trocknung des Granulats kontinuierlich, insbesondere in einem Wirbelstromtrockner, erfolgen.

Gleichermaßen ist es aber auch möglich, daß in Schritt c) die Trocknung des Granulats diskontinuierlich bzw, batchweise, insbesondere in einem Wirbelschichttrockner, erfolgt. Gleichermaßen ist auch eine Trocknung durch Mikrowellenbestrahlung oder unter Verwendung eines Bandtrockners möglich.

Was die in Schritt c) des erfindungsgemäßen Verfahrens vorgesehene Trocknung des erhaltenen Granulats anbelangt, so kann auch diese bei Raumtemperatur (etwa 20° C) und einem Druck von etwa 1013 hPa erfolgen. Gleichermaßen ist es jedoch auch möglich, daß in Schritt c) die Trocknung des Granulats bei einer Temperatur von 30 bis 130° C, insbesondere 40 bis 100° C, vorzugsweise 70 bis 80° C, durchgeführt wird. Weiterhin kann es im Rahmen des erfindungsgemäßen Verfahrens vorgesehen sein, daß in Schritt c) die Trocknung des Granulats unter vermindertem Druck, insbesondere unter Vakuum, durchgeführt wird.

Nach in Schritt c) erfolgter Trocknung kann das getrocknete Granulat insbesondere in einer Abkühlvorrichtung und/oder Abkühlzone abgekühlt werden, vorzugsweise auf eine Temperatur von 10 bis 20° C.

Insgesamt wird - mit anderen Worten - die erfindungsgemäße Instant-Getränkezusammensetzung insbesondere mit Hilfe eines Granulationsvorganges mit anschließender Trocknung hergestellt, wobei zunächst eine Grundmasse, insbesondere wie in Verfahrensschritt a) hergestellt, mit Wasser befeuchtet wird, und zwar so lange, bis eine granulierfähige Masse entsteht, die durch entsprechende Siebe gedrückt wird, welche spezielle "Würstchengranulate" entstehen lassen. Die anschließende Trocknung kann in verschiedenen kontinuierlichen Wirbelstromtrocknern erfolgen oder batchweise in Wirbelstromtrocknern, wie zuvor beschrieben.

Schließlich kann es im Rahmen des erfindungsgemäßen Verfahrens vorgesehen sein, daß sich der Trocknung in Schritt c) ein Verfahrensschritt des Klassierens anschließt, insbesondere mittels Siebens, wobei bei dem Verfahrensschritt des Klassierens Granulate mit Teilchengrößen ober- oder unterhalb der gewünschten Teilchengrößen abgetrennt werden können.

Schließlich ist weiterer Gegenstand der vorliegenden Erfindung- gemäß einem **dritten** Aspekt der vorliegenden Erfindung - die Verwendung der zuvor beschriebenen Instant-Getränkezusammensctzung nach der vorliegenden Erfindung zur Herstellung eines vorzugsweise kalorienreduzierten Instant-Getränks, insbesondere Instant-Teegetränks. Zu Zwecken der Herstellung des fertigen Instant-Getränks wird die erfindungsgemäße Instant-Getränkezusammensetzung mit einer trinkbaren Flüssigkeit, insbesondere Wasser, aufbereitet, wobei vorzugsweise 2 bis 9 g, bevorzugt 3 bis 8 g, besonders bevorzugt 4 bis 6 g, der Zusammensetzung auf 100 ml Trinkflüssigkeit, insbesondere Wasser, verwendet werden. Aufgrund der besonderen Ausgestaltung der erfindungsgemäßen Instant-Getränkezusammensetzung, wie zuvor beschrieben, weist das damit hergestellte Instant-Getränk einen verringerten Kaloriengehalt und somit verbesserte ernährungsphysiologische Eigenschaften bei gleichzeitig verminderter kariogener Wirkung auf.

Im Rahmen der vorliegenden Erfindung ist es insgesamt gelungen, durch eine spezielle Rezeptierung und Herstellung eine kalorienreduzierte Instant-Getränkezusammensetzung nach der vorliegenden Erfindung bzw. ein kalorienreduziertes Granulat zum anschließenden Zubereiten eines Instant-Getränks bereitzustellen. Die mit der erfindungsgemäßen Instant-Getränkezusammensetzung hergestellten Getränke können Tee oder teeähnlich sein, wie z.B. Zitronentee, Pfirsichtee oder Apfeltee sowie Wildfruchttee. Zudem kann die erfindungsgemäße Instant-Getränkezusammensetzung auch derart ausgestaltet sein, daß damit sozusagen herkömmliche Instant-Getränke, wie Orangengetränk, Zitronengetränk, Grapefruitgetränk und dergleichen hergestellt werden können.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der vorliegenden Ausführungsbeispiele veranschaulicht, welche die vorliegende Erfindung jedoch nicht beschränken.

### Ausführungsbeispiele:

### Beispiel 1: Rezepturbeispiel für eine erfindungsgemäße Instant-Getränkezusammensetzung zur Herstellung eines kalorienreduzierten Zitronentees

Es wurde eine Ausgangsmischung auf Basis der folgenden Bestandteile bzw. Inhaltsstoffe hergestellt:

| | |
|---|---|
| Zucker (Saccharose) | 51,26 Gew.-% |
| Dextrose | 40,00 Gew.-% |
| Citronensäure | 5,00 Gew.-% |
| Schwarztee-Extrakt | 2,56 Gew.-% |
| Vitamin C | 0,50 Gew.-% |
| Aroma | 0,28 Gew.-% |
| Aspartam | 0,15 Gew.-% |
| Acesulfam K | 0,15 Gew.-% |
| Zitronenfruchtpulver | 0,15 Gew.-% |

Die zuvor beschriebene Mischung wurde zu einem stäbchenförmigen Granulat verarbeitet, wobei die einzelnen Teilchen einen Durchmesser von etwa 1,5 mm und eine Länge von etwa 2,5 mm aufweisen, Anschließend wurde das so erhaltene Granulat auf einen Gesamtrestfeuchtegehalt von etwa 3 Gew.-%, bezogen auf das Granulat, eingestellt. Es resultiert eine Instant-Getränkezusammensetzung, welche sich zur Aufbereitung bzw. Zubereitung eines Teegetränks eignet. Hierzu werden etwa 5 g der erfindungsgemäßen Instant-Getränkezusammensetzung mit 100 ml Wasser aufgegossen, so daß ein erfrischendes und kalorienreduziertes Teegetränk resultiert. Dabei weist das kalorienreduzierte Teegetränk im Vergleich zu mit herkömmlichen Instant-Getränkezusammensetzungen zubereiteten Teegetränken einen um etwa 50 % reduzierten Kaloriengehalt auf. Im Vergleich zu herkömmlichen Instant-Getränkezusammensetzungen ist zudem die zu der Flüssigkeit zugegebene Menge deutlich reduziert: Herkömmliche Getränke werden mit 10 g eines herkömmlichen Instant-Getränkepulvers pro 100 ml Wasser zubereitet.

Es versteht sich von selbst, daß nicht nur Teegetränke auf Basis von Schwarztee-Extrakten hergestellt werden können, sondern auch solche auf Basis von weiteren Fruchtextrakten und dergleichen, z. B. Hibiskus-Extrakten, Grüntee-Extrakten, Rotbusch-Extrakten (Rooibos-Extrakten) usw.

### Beispiel 2: Rezepturbeispiel für eine erfindungsgemäße Instant-Getränkezusammensetzung zur Herstellung eines kalorienreduzierten Wildfruchtteegetränks

In entsprechender Weise wie in Ausführungsbeispiel 1 wird eine Instant-Getränkezusammensetzung für ein Teegetränk auf Basis der folgenden Ausgangsmischung hergestellt:

| | |
|---|---|
| Zucker (Saccharose) | 68,85 Gew.-% |
| Dextrose | 20,00 Gew.-% |
| Citronensäure | 5,60 Gew.-% |
| Hibiskus-Extrakt | 3,00 Gew.-% |
| Aroma | 1,25 Gew.-% |
| Vitamin C | 0,50 Gew.-% |
| Rote Bete Saftpulver | 0,50 Gew.-% |
| Aspartam | 0,15 Gew.-% |
| Acesulfam K | 0,15 Gew.-% |
| Hagebuttenextrakt | 0,15 Gew.-% |

Auf Basis dieser Ausgangsmischung wird wie zuvor beschrieben ein Granulat hergestellt. Etwa 5 g der erfindungsgemäßen Zusammensetzung bzw. des Granulats auf 100 ml Wasser liefern ein erfrischendes Wildfruchtteegetränk, welches gegenüber herkömmlichen Wildfruchtteegetränken einen um etwa 50 % verminderten Kaloriengehalt aufweist.

## Patentansprüche

1. Instant-Getränkezusammensetzung, insbesondere zur Herstellung eines vorzugsweise kalorienreduzierten Instant-Getränks durch Aufbereiten mit einer trinkbaren Flüssigkeit, in Form eines Granulats, wobei die Zusammensetzung mindestens einen Granulatbildner und mindestens einen Geschmacksbildner aufweist,
wobei die Menge an Granulatbildner 50 bis 95 Gew.-%, bezogen auf die Zusammensetzung und/oder das Granulat, beträgt und der Granulatbildner Isomaltulose ist,
wobei die Menge an Geschmacksbildner 2 bis 25 Gew.-%, bezogen auf die Zusammensetzung und/oder das Granulat, beträgt, und der Geschmacksbildner ausgewählt ist aus Extrakten, Pflanzenpulvern, Fruchtpulvern, Saftpulvern oder deren Mischungen,
wobei die Zusammensetzung Granulate in einer Schüttdichte von 200 bis 600 g/l aufweist und
wobei die Zusammensetzung und/oder das Granulat, bezogen auf die Zusammensetzung und/oder das Granulat, eine Gesamtrestfeuchte von 0,5 bis 8 Gew.-% aufweisen.

2. Zusammensetzung nach Anspruch 1,
• wobei der Geschmacksbildner ausgewählt ist aus Pflanzenextrakten, Fruchtextrakten, Tee-Extrakten oder deren Mischungen, vorzugsweise in Mengen von 0,1 bis 10 Gew.-%, bevorzugt 0,25 bis 8 Gew.-%, besonders bevorzugt 0,5 bis 6 Gew.-%,ganz besonders bevorzugt 1 bis 5 Gew.-%, bezogen auf die Zusammensetzung und/oder das Granulat; und/oder
• wobei der Geschmacksbildner ausgewählt aus Pflanzenpulvern, Fruchtpulvern und/oder Saftpulvern, vorzugsweise in Mengen von 0,01 bis 8 Gew.-%, bevorzugt 0,05 bis 6 Gew.-%, besonders bevorzugt 0,1 bis 4 Gew.-%, ganz besonders bevorzugt 0,15 bis 3 Gew.-%, bezogen auf die Zusammensetzung und/oder das Granulat, eingesetzt wird.

3. Zusammensetzung nach Anspruch 1 oder 2,
• wobei die Zusammensetzung Säuerungsmittel, insbesondere aus der Gruppe von Genußsäuren, vorzugsweise Citronensäure, Weinsäure und Äpfelsäure, enthält, vorzugsweise in Mengen von 0,1 bis 10 Gew.-%, bevorzugt 1 bis 10 Gew.-%, ganz besonders bevorzugt 2 bis 8 Gew.-%, bezogen auf die Zusammensetzung und/oder das Granulat; und/oder
• wobei die Zusammensetzung Vitamine, insbesondere Ascorbinsäure (Vitamin C), enthält, vorzugsweise in Mengen von 0,01 bis 5 Gew,-%, bevorzugt 0,1 bis 4 Gew.-%, ganz besonders bevorzugt 0,5 bis 2 Gew.%, bezogen auf die Zusammensetzung und/oder das Granulat; und/oder
• wobei die Zusammensetzung Farbstoffe, insbesondere natürliche und/oder naturidentische Farbstoffe, enthält, vorzugsweise in Mengen von 0,01 bis 5 Gew.-%, bevorzugt 0,1 bis 4 Gew.-%, ganz besonders bevorzugt 0,5 bis 3 Gew.-%, bezogen auf die Zusammensetzung und/oder das Granulat.

4. Zusammensetzung nach einem der vorangehenden Ansprüche,
• wobei die Zusammensetzung in Form eines kornförmigen Granulats vorliegt, insbesondere wobei das Granulat eine Partikelgröße von 0,1 bis 6 mm, insbesondere 0,2 bis 5 mm, vorzugsweise 0,5 bis 3,5 mm, aufweist; oder
• wobei die Zusammensetzung in Form eines zumindest im wesentlichen stäbchenförmigen Granulats vorliegt, insbesondere wobei das Granulat einen Partikeldurchmesser von 0,1 bis 6 mm, insbesondere 0,2 bis 5 mm, vorzugsweise 0,5 bis 3,5 mm, aufweist und/oder insbesondere wobei das Granulat eine Partikellänge von 0,2 bis 10 mm, insbesondere 0,4 bis 6 mm, vorzugsweise 0,5 bis 4 mm, aufweist.

5. Zusammensetzung nach einem der vorangehenden Ansprüche,
• wobei die Zusammensetzung Granulate mit einer Schüttdichte von 325 bis 550 g/l, vorzugsweise 350 bis 480 g/l, aufweist; und/oder
• wobei die Zusammensetzung und/oder das Granulat, bezogen auf die Zusammensetzung und/oder das Granulat, eine Gesamtrestfeuchte von 1 bis 5 Gew.-%, vorzugsweise 2 bis 4 Gew.-%, aufweisen; und/oder
• wobei die Zusammensetzung in Wasser zumindest im wesentlichen, insbesondere vollständig, löslich ist; und/oder
• wobei die Zusammensetzung zumindest im wesentlichen, vorzugsweise vollständig, aus dem Granulat besteht.

6. Verfahren zur Herstellung einer Instant-Getränkezusammensetzung, insbesondere zur Herstellung eines vorzugsweise kalorienreduzierten Instant-Getränks durch Aufbereiten mit einer trinkbaren Flüssigkeit, in Form eines Granulats auf Basis mindestens eines Granulatbildners und mindestens eines Geschmacksbildners, wie in einem der vorangehenden Ansprüche definiert, wobei das Verfahren die folgenden Verfahrensschritte umfaßt:
a) Herstellung einer Mischung, welche mindestens einen Granulatbildner und mindestens einen Geschmacksbildner, wie in einem der vorangehenden Ansprüche definiert, enthält;
b) nachfolgend Herstellung eines Granulats aus der in Schritt a) hergestellten Mischung;
c) schließlich Trocknung des in Schritt b) hergestellten Granulats, wobei das Granulat auf eine Gesamtrestfeuchte von 0,5 bis 8 Gew.-%, bezogen auf das Granulat, eingestellt wird und ein Granulat mit einer Schüttdichte von 200 bis 600 g/l, wie in einem der vorangehenden Ansprüchen definiert, resultiert.

7. Verfahren nach Anspruch 6,
• wobei in Schritt a) die Mischung durch Zugabe, insbesondere Einmischen, von Wasser angefeuchtet wird; und/oder
• wobei in Schritt a) die Mischung durch Zugabe, insbesondere Einmischen, von flüssigen Extrakten, insbesondere Pflanzenextrakten, Fruchtextrakten, Tee-Extrakten oder deren Mischungen, angefeuchtet wird; und/oder
• wobei in Schritt a) die Mischung durch Zugabe, insbesondere Einmischen, von Pflanzensäften, Fruchtsäften oder deren Mischungen, angefeuchtet wird; und/oder
• wobei in Schritt a) die Mischung auf einen Gesamtfeuchtegehalt von 0,5 bis 15 Gew.%, insbesondere 0,5 bis 10 Gew.-%, vorzugsweise 2 bis 5 Gew.-%, bezogen auf die Mischung, eingestellt wird.

8. Verfahren nach einem der vorangehenden Ansprüche,
• wobei in Schritt b) die Herstellung des Granulats durch Hindurchdrücken der in Schritt a) hergestellten Mischung durch mindestens ein Sieb erfolgt; und/oder
• wobei in Schritt b) die Herstellung des Granulats in einem Granulator erfolgt,

9. Verfahren nach einem der vorangehenden Ansprüche, wobei in Schritt a) und/oder in Schritt b) bei Raumtemperatur, insbesondere bei etwa 20° C, und/oder bei Umgebungsdruck, insbesondere bei einem Druck von etwa 1.013 hPa, verfahren wird.

10. Verfahren nach einem der vorangehenden Ansprüche,
• wobei in Schritt c) das Granulat auf eine Gesamtrestfeuchte von 1 bis 5 Gew.-%, vorzugsweise 2 bis 4 Gew.-%, bezogen auf das Granulat, eingestellt wird; und/oder
• wobei in Schritt c) die Trocknung des Granulats kontinuierlich, insbesondere in einem Wirbelstromtrockner, erfolgt; und/oder
• wobei in Schritt c) die Trocknung des Granulats diskontinuierlich und/oder batchweise, insbesondere in einem Wirbelschichttrockner, erfolgt; und/oder
• wobei in Schritt c) die Trocknung des Granulats bei einer Temperatur von 30 bis 130 °C, insbesondere 40 bis 100 °C, vorzugsweise 70 bis 80 °C, durchgeführt wird; und/oder
• wobei in Schritt c) die Trocknung des Granulats unter vermindertem Druck, insbesondere unter Vakuum, durchgeführt wird; und/oder
• wobei das in Schritt c) getrocknete Granulat insbesondere in einer Abkühlvorrichtung und/oder Abkühlzone abgekühlt wird, vorzugsweise auf eine Temperatur von 10 bis 20°C.

11. Verfahren nach einem der vorangehenden Ansprüche, wobei sich der Trocknung in Schritt c) ein Verfahrensschritt des Klassierens anschließt, insbesondere mittels Siebens.

12. Instant-Getränkezusammensetzung, insbesondere nach einem der Ansprüche 1 bis 5, insbesondere zur Herstellung eines vorzugsweise kalorienreduzierten Instant-Getränks durch Aufbereiten mit einer trinkbaren Flüssigkeit, erhältlich nach dem Verfahren nach einem der Ansprüche 6 bis 11.

13. Verwendung einer Instant-Getränkezusammensetzung nach einem der Ansprüche 1 bis 5 zur Herstellung eines vorzugsweise kalorienreduzierten Instant-Getränks, insbesondere Instant- Teegetränks.

14. Verwendung nach Anspruch 13, wobei die Herstellung des trinkfertigen Instant-Getränks durch Aufbereiten mit einer trinkbaren Flüssigkeit, insbesondere Wasser, erfolgt, vorzugsweise mit 2 bis 9 g, bevorzugt 3 bis 8 g, besonders bevorzugt 4 bis 6 g, der Zusammensetzung auf 100 ml Flüssigkeit.

## Claims

1. Instant beverage composition, particularly for producing a preferably reduced-calorie instant drink in the form of pellets through preparation with a drinkable liquid, wherein the composition comprises at least a pellet former and at least a flavouring agent,
wherein the amount of pellet former is 50 to 95 wt.-%, based on the composition and/or the pellets by weight and the pellet former is isomaltulose,
wherein the amount of flavouring agent is 2 to 25 wt .-%, based on the composition and/or the pellets, while the flavouring agent is selected from extracts, plant powders, fruit powders, juice powders or mixtures thereof,
wherein the composition comprises pellets in a bulk density of 200 to 600 g/l and
wherein the composition and/or the pellets has/have a total residual moisture of 0.5 to 8 wt.-% based on the composition and/or the pellets.

2. Composition according to claim 1,
• wherein the flavouring agent is selected from plant extracts, fruit extracts, tea extracts, or mixtures thereof, preferably in amounts from 0.1 to 10 wt .-%, more preferably from 0.25 to 8 wt .-%, particularly preferably from 0.5 to 6 wt .-%, most preferably from 1 to 5 wt .-%, based on the composition and/or the pellets; and/or
• wherein the flavouring agent is selected from plant powders, fruit powders and/or juice powders, preferably in amounts from 0.01 to 8 wt .-%, more preferably from 0.05 to 6 wt .-%, particularly preferably from 0.1 to 4 wt .-%, most preferably from 0.15 to 3 wt .-%, based on the composition and/or the pellets.

3. Composition according to claim 1 or 2,
• wherein the composition contains an acidifying agent, in particular from the group of edible acids, preferably citric acid, tartaric acid and malic acid, preferably in amounts from 0.1 to 10 wt, -%, preferably from 1 to 10 wt .-%, more preferably from 2 to 8 wt, -%, based on the composition and/or the pellets; and/or
• wherein the composition contains vitamins, especially ascorbic acid (vitamin C), preferably in amounts from 0.01 to 5 wt .-%, more preferably from 0.1 to 4 wt.-%, most preferably from 0.5 to 2 wt. -%, based on the composition and/or the pellets, and/or
• wherein the composition contains dyes, in particular natural and/or nature-identical dyes, preferably in amounts from 0.01 to 5 wt.-%, more preferably from 0.1 to 4 wt .-%, most preferably from 0.5 to 3 wt .-%, based on the composition and/or the pellets.

4. Composition according to any one of the preceding claims,
• wherein the composition is in the form of grain-like pellets, in particular wherein the pellets have a particle size from 0.1 to 6 mm, particularly from 0.2 to 5 mm, preferably from 0,5 to 3,5 mm; or
• wherein the composition is in the form of at least substantially rod-like pellets, in particular wherein the pellets have a diameter from 0.1 to 6 mm, particularly from 0.2 to 5 mm, preferably from 0.5 to 3.5 mm, and/or in particular wherein the pellets have a length from 0.2 to 10 mm, in particular 0.4 to 6 mm, preferably from 0.5 to 4 mm.

5. Composition according to any one of the preceding claims,
• wherein the composition comprises pellets with a bulk density from 325 to 550 g/l, preferably from 350 to 480 g/l; and/or
• wherein the composition and/or the pellets has/have a total residual moisture from 1 to 5 wt%, preferably from 2 to 4 wt, -%, based on the composition and/or the pellets; and/or
• wherein the composition is at least substantially, preferably entirely, soluble in water; and/or
• wherein the composition comprises at least substantially, preferably entirely, pellets.

6. Method for producing an instant beverage composition, particularly for producing a preferably reduced-calorie instant drink in the form of pellets through preparation with a drinkable liquid, wherein the composition comprises at least a pellet former and at least a flavouring agent as defined in any of the preceding claims, wherein the method comprises the following method steps:
a) preparation of a mixture containing at least a pellet former and at least a flavouring agent as defined in any one of the preceding claims;
b) subsequent preparation of pellets from the mixture prepared in step a);
c) finally drying of the pellets produced in step b), wherein the pellet has a total residual moisture of 0.5 to 8 wt .-%, based on the pellets, and a pellet has a bulk density of 200 to 600 g/l, as defined in one of the preceding claims.

7. Method according to claim 6,
• wherein in step a), the mixture is moistened by adding, in particular by mixing, water; and/or
• wherein in step a), the mixture is moistened by adding, in particular by mixing, liquid extracts, in particular plant extracts, fruit extracts, tea extracts or mixtures thereof; and/or
• wherein in step a), the mixture is moistened by adding, in particular by mixing, plant juices, fruit juices or mixtures thereof; and/or
• wherein in step a), the mixture is adjusted to a total moisture content from 0.5 to 15 wt .-%, in particular from 0.5 to 10 wt, -%, preferably from 2 to 5 wt .-%, based on the mixture.

8. Method according to any one of the preceding claims,
• wherein the preparation of the pellets is carried out in step b) by forcing the mixture prepared in step a) through at least one screen; and/or
• wherein the preparation of the pellets is carried out in step b) in a granulator,

9. Method according to any one of the preceding claims wherein the method is effected in step a) and/or in step b) at room temperature, in particular at about 20°C and/or at ambient pressure, in particular at a pressure of approximately 1,013 hPa.

10. Method according to any one of the preceding claims,
• wherein in step c) the pellets are adjusted to a total residual moisture from 1 to 5 wt%, preferably from 2 to 4 wt .-%, based on the pellets, and/or
• wherein in step c), the drying of the pellets Is effected continuously, especially in an eddy current dryer; and/or
• wherein in step c), the drying of the pellets Is effected intermittently and/or in batches, in particular in a fluidised bed dryer; and/or
• wherein in step c), the drying of the pellets Is effected at a temperature from 30 to 130°C, especially from 40 to 100°C, preferably from 70 to 80°C; and/or
• wherein in step c), the drying of the pellets Is effected under reduced pressure, in particular under vacuum; and/or
• wherein the pellets dried in step c) are cooled, in particular in a cooling device and/or a cooling zone, preferably to a temperature of 10 to 20°C.

11. Method according to any one of the preceding claims, wherein the drying in step c) is followed by a grading step, in particular by means of a screen.

12. Instant beverage composition, in particular according to one of the claims 1 to 5, particularly for producing a preferably reduced-calorie instant drink in the form of a pellets through preparation with a drinkable liquid, obtainable by the method according to one of the claims 6 to 11.

13. Use of an instant beverage composition according to any one of the claims 1 to 5 for producing a preferably reduced-calorie instant drink, in particular an instant tea beverage.

14. Use, according to claim 13, wherein the preparation of the ready-to-drink instant beverage is effected by preparation with a drinkable liquid, in particular water, preferably with 2 to 9 g, more preferably with 3 to 8 g, most preferably with 4 to 6 g of the composition to 100 ml liquid.

## Revendications

1. Composition de boisson instantanée, notamment pour la fabrication d'une boisson instantanée de préférence réduite en calories par préparation avec un liquide potable, sous la forme d'un granulat, la composition comprenant au moins un agent de formation d'un granulat et au moins un exhausteur de goût,
la quantité d'agent de formation de granulat étant de 50 à 95 % en poids, par rapport à la composition et/ou au granulat, et l'agent de formation de granulat étant l'isomaltulose,
la quantité de l'exhausteur de goût étant de 2 à 25 % en poids, par rapport à la composition et/ou au granulat, et l'exhausteur de goût étant choisi parmi les extraits, les poudres de plantes, les poudres de fruits, les poudres de jus ou leurs mélanges,
la composition comprenant des granulats d'une densité apparente de 200 à 600 g/l et
la composition et/ou le granulat présentant, par rapport à la composition et/ou au granulat, une humidité résiduelle totale de 0,5 à 8 % en poids.

2. Composition selon la revendication 1,
- dans laquelle l'exhausteur de goût est choisi parmi les extraits de plantes, les extraits de fruits, les extraits de thé ou leurs mélanges, avantageusement en quantités de 0,1 à 10 % en poids, de préférence de 0,25 à 8 % en poids, de manière particulièrement préférée de 0,5 à 6 % en poids, de manière tout particulièrement préférée de 1 à 5 % en poids, par rapport à la composition et/ou au granulat ; et/ou
- dans laquelle l'exhausteur de goût est choisi parmi les poudres de plantes, les poudres de fruits et/ou les poudres de jus, avantageusement en quantités de 0,01 à 8 % en poids, de préférence de 0,05 à 6 % en poids, de manière particulièrement préférée de 0,1 à 4% en poids, de manière tout particulièrement préférée de 0,15 à 3 % en poids, par rapport à la composition et/ou au granulat.

3. Composition selon la revendication 1 ou 2,
- dans laquelle la composition contient un agent acidifiant, notamment du groupe constitué par les acides gustatifs, de préférence l'acide citrique, l'acide tartrique et l'acide malique, avantageusement en quantités de 0,1 à 10 % en poids, de préférence de 1 à 10 % en poids, de manière tout particulièrement préférée de 2 à 8 % en poids, par rapport à la composition et/ou au granulat ; et/ou
- dans laquelle la composition contient des vitamines, notamment de l'acide ascorbique (vitamine C), avantageusement en quantités de 0,01 à 5 % en poids, de préférence de 0,1 à 4% en poids, de manière tout particulièrement préférée de 0,5 à 2 % en poids, par rapport à la composition et/ou au granulat ; et/ou
- dans laquelle la composition contient des colorants, notamment des colorants naturels et/ou identiques aux naturels, avantageusement en quantités de 0,01 à 5 % en poids, de préférence de 0,1 à 4 % en poids, de manière tout particulièrement préférée de 0,5 à 3 % en poids, par rapport à la composition et/ou au granulat.

4. Composition selon l'une quelconque des revendications précédentes,
- dans laquelle la composition se présente sous la forme d'un granulat granulaire, notamment dans laquelle le granulat présente une taille de particule de 0,1 à 6 mm, notamment de 0,2 à 5 mm, de préférence de 0,5 à 3,5 mm ; ou
- dans laquelle la composition se présente sous la forme d'un granulat au moins essentiellement en forme de baguettes, notamment dans laquelle le granulat présente un diamètre de particule de 0,1 à 6 mm, notamment de 0,2 à 5 mm, de préférence de 0,5 à 3,5 mm, et/ou notamment dans laquelle le granulat présente une longueur de particule de 0,2 à 10 mm, notamment de 0,4 à 6 mm, de préférence de 0,5 à 4 mm.

5. Composition selon l'une quelconque des revendications précédentes,
- dans laquelle la composition comprend des granulats d'une densité apparente de 325 à 550 g/l, de préférence de 350 à 480 g/l ; et/ou
- dans laquelle la composition et/ou le granulat présentent, par rapport à la composition et/ou au granulat, une humidité résiduelle totale de 1 à 5 % en poids, de préférence de 2 à 4 % en poids ; et/ou
- dans laquelle la composition est au moins essentiellement, notamment entièrement, soluble dans l'eau ; et/ou
- dans laquelle la composition est constituée au moins essentiellement, de préférence entièrement, du granulat.

6. Procédé de fabrication d'une composition de boisson instantanée, notamment pour la fabrication d'une boisson instantanée de préférence réduite en calories par préparation avec un liquide potable, sous la forme d'un granulat à base d'au moins un agent de formation d'un granulat et d'au moins un exhausteur de goût, telle que définie dans l'une quelconque des revendications précédentes, le procédé comprenant les étapes de procédé suivantes :
a) la fabrication d'un mélange qui contient au moins un agent de formation d'un granulat et au moins un exhausteur de goût, tels que définis dans l'une quelconque des revendications précédentes ; puis
b) la fabrication d'un granulat à partir du mélange fabriqué à l'étape a) ; et enfin
c) le séchage du granulat fabriqué à l'étape b), le granulat étant ajusté à une humidité résiduelle totale de 0,5 à 8 % en poids, par rapport au granulat, et un granulat d'une densité apparente de 200 à 600 g/l, tel que défini dans l'une quelconque des revendications précédentes, étant obtenu.

7. Procédé selon la revendication 6,
- dans lequel, à l'étape a), le mélange est humidifié par ajout, notamment incorporation, d'eau ; et/ou
- dans lequel, à l'étape a), le mélange est humidifié par ajout, notamment incorporation, d'extraits liquides, notamment d'extraits de plantes, d'extraits de fruits, d'extraits de thé ou leurs mélanges ; et/ou
- dans lequel, à l'étape a), le mélange est humidifié par ajout, notamment incorporation, de jus de plantes, de jus de fruits ou leurs mélanges ; et/ou
- dans lequel, à l'étape a), le mélange est ajusté à une teneur en humidité totale de 0,5 à 15 % en poids, notamment de 0,5 à 10 % en poids, de préférence de 2 à 5 % en poids, par rapport au mélange.

8. Procédé selon l'une quelconque des revendications précédentes,
- dans lequel, à l'étape b), la fabrication du granulat a lieu par compression du mélange fabriqué à l'étape a) au travers d'au moins un tamis ; et/ou
- dans lequel, à l'étape b), la fabrication du granulat a lieu dans un granulateur.

9. Procédé selon l'une quelconque des revendications précédentes, dans lequel l'étape a) et/ou l'étape b) sont effectuées à température ambiante, notamment à environ 20 °C, et/ou à pression ambiante, notamment à une pression d'environ 1013 hPa.

10. Procédé selon l'une quelconque des revendications précédentes,
- dans lequel, à l'étape c), le granulat est ajusté à une humidité résiduelle totale de 1 à 5 % en poids, de préférence de 2 à 4 % en poids, par rapport au granulat ; et/ou
- dans lequel, à l'étape c), le séchage du granulat a lieu en continu, notamment dans un séchoir à lit fluidisé ; et/ou
- dans lequel, à l'étape c), le séchage du granulat a lieu de manière discontinue et/ou en lots, notamment dans un séchoir à lit fluidisé ; et/ou
- dans lequel, à l'étape c), le séchage du granulat est réalisé à une température de 30 à 130 °C, notamment de 40 à 100 °C, de préférence de 70 à 80 °C ; et/ou
- dans lequel, à l'étape c), le séchage du granulat est réalisé sous pression réduite, notamment sous vide ; et/ou
- dans lequel le granulat séché à l'étape c) est refroidi, notamment dans un dispositif de refroidissement et/ou une zone de refroidissement, de préférence à une température de 10 à 20 °C.

11. Procédé selon l'une quelconque des revendications précédentes, dans lequel le séchage à l'étape c) est suivi par une étape de procédé de classification, notamment par tamisage.

12. Composition de boisson instantanée, notamment selon l'une quelconque des revendications 1 à 5, notamment pour la fabrication d'une boisson instantanée de préférence réduite en calories par préparation avec un liquide potable, pouvant être obtenue par le procédé selon l'une quelconque des revendications 6 à 11.

13. Utilisation d'une composition de boisson instantanée selon l'une quelconque des revendications 1 à 5 pour la fabrication d'une boisson instantanée de préférence réduite en calories, notamment d'une boisson instantanée à base de thé.

14. Utilisation selon la revendication 13, dans laquelle la fabrication de la boisson instantanée prête à boire a lieu par préparation avec un liquide potable, notamment de l'eau, avantageusement avec 2 à 9 g, de préférence 3 à 8 g, de manière particulièrement préférée 4 à 6 g, de la composition pour 100 ml de liquide.
